# FASCICULE DE BREVET EUROPEEN

(11) **EP 1 791 788 B1**
(45) Date de publication et mention de la délivrance du brevet: **09.12.2009**
(21) Numéro de dépôt: 05805784.5
(22) Date de dépôt: 19.09.2005
(51) Int. Cl.: C01F 7/06, C01F 7/47, B01D 21/01, B01D 21/26

(54) **PERFECTIONNEMENT AU PROCEDE BAYER DE FABRICATION DE TRIHYDRATE D"ALUMINE, LEDIT PERFECTIONNEMENT PORTANT SUR LA SEPARATION DE LA LIQUEUR D"ALUMINATE ET DES RESIDUS INSOLUBLES**
VERBESSERTES BAYER-VERFAHREN ZUR HERSTELLUNG VON ALUMINIUMTRIHYDRAT HINSICHTLICH TRENNUNG VON ALUMINATLAUGE UND UNLÖSLICHEN RÜCKSTÄNDEN
IMPROVEMENT TO BAYER PROCESS FOR MAKING ALUMINA TRIHYDRATE, SAID IMPROVEMENT CONCERNING THE SEPARATION OF ALUMINATE LIQUOR AND INSOLUBLE RESIDUES

(30) Priorité: 21.09.2004 FR 0409946
(43) Date de publication de la demande: 06.06.2007
(73) Titulaire: ALUMINIUM PECHINEY, 38340 Voreppe (FR)
(72) Inventeur: ROUSSEAUX, Jean-Marc, F-13100 Aix-en-Provence (FR); PIGNOL, Gérard, F-13120 Gardanne (FR); MAGNAN, Yves, F-13109 Simiana Collongue (FR)
(74) Mandataire: Fénot, Dominique
(86) Numéro de dépôt international: PCT/FR2005/002309
(87) Numéro de publication internationale: WO 2006/032770

(56) Documents cités:
- DE-A1- 19 903 011
- FR-A- 2 718 982
- US-A- 4 328 094

## Description

### DOMAINE TECHNIQUE

L'invention concerne un perfectionnement du procédé de fabrication de trihydrate d'alumine par attaque alcaline de bauxite selon le procédé Bayer. Elle concerne plus particulièrement les différentes techniques de séparation liquide/solide utilisées pour extraire les résidus insolubles issus de l'attaque qui se présentent sous forme de particules de petite dimension (D50 nettement inférieur à 100 µm, typiquement inférieur à 20 µm).

### ETAT DE LA TECHNIQUE

Le procédé Bayer, largement décrit dans la littérature spécialisée, constitue la technique essentielle de production d'alumine destinée à être transformée en aluminium par électrolyse ignée ou à être utilisée à l'état d'hydrate, d'alumine de transition, d'alumine calcinée, d'alumine frittée ou fondue, dans les nombreuses applications relevant du domaine des alumines techniques. Selon ce procédé, le minerai de bauxite est broyé puis attaqué à chaud au moyen d'une solution aqueuse d'hydroxyde de sodium à concentration appropriée, provoquant ainsi la solubilisation de l'alumine et l'obtention d'une suspension constituée de particules de résidu inattaqué baignant dans une solution d'aluminate de sodium, appelée "liqueur d'aluminate". Cette suspension est ensuite diluée et traitée de façon à séparer, en général par décantation, les résidus inattaqués de la liqueur d'aluminate. La liqueur issue de cette séparation se trouve dans un état de sursaturation qui conduit à la précipitation du trihydrate d'alumine, phénomène que l'on appelle "décomposition". Après la décomposition la liqueur d'aluminate de sodium, appauvrie en hydrate d'alumine du fait de la précipitation, est recyclée après concentration vers l'attaque du minerai.

Après attaque et dilution, la suspension comprend tous les résidus insolubles de la bauxite. La majeure partie est sous forme de boue très fine (boues rouges) provenant de la désagrégation lors de l'attaque du constituant aluminoferrique de la bauxite et sa granulométrie est à peu près indépendante des conditions de broyage préalable de la bauxite; la grosseur des grains élémentaires est comprises entre 0,1 et 20 µm. Parfois, avec certaines qualités de bauxite, et plus particulièrement si le broyage n'a pas été poussé, on observe une certaine quantité de résidus plus grossiers (diamètre typiquement supérieur à 106 µm), appelés "sables", plus riches en Fe₂O₃ et moins riches en SiO₂ que les boues rouges. Ces sables proviennent par exemple de l'épuisement par la soude des pisolithes ferrugineux très abondants dans certaines bauxites. Lorsque leur proportion dépasse quelques %, on sépare ces sables sans difficulté particulière à l'aide d'appareillages classiques de l'industrie minière tels que des classificateurs à râteaux, des séparateurs à vis ou, comme indiqué dans DE 199 03 011, des hydrocyclones associés à un crible d'égouttage vibrant. La séparation de ces sables n'est pas concernée par la présente invention.

Par contre, en raison de la granulométrie beaucoup plus fine des particules qui les composent, les boues rouges sont plus difficiles à séparer et à laver. On pratique à l'heure actuelle dans l'industrie de l'alumine essentiellement la technique de sédimentation, réalisée dans des décanteurs-épaississeurs à marche continue. La sédimentation est associée à deux phénomènes: la décantation proprement dite, ou clarification, destinée à la séparation des liqueurs exemptes de boues et l'épaississement des boues déposées, qui conditionne l'efficacité de leur lavage ultérieur.

Plusieurs facteurs influent sur la vitesse de décantation: des facteurs physiques simples qui régissent la chute de particules au sein d'une suspension (diamètre des particules, densité et viscosité du liquide, etc..) et des phénomènes de floculation (agrégation des particules) complexes et extrêmement variables selon l'origine de la bauxite attaquée. L'addition d'agents floculants permet d'augmenter très sensiblement les vitesses de décantation. Ainsi, par exemple, EP 0 618 882 (ALCAN) propose l'ajout d'un floculant à base d'acrylamide et/ou acrvlate de sodium, WO97/4106 (CYTEC) propose l'emploi d'hydroxamates à poids moléculaire élevé (supérieur à 10 000, de préférence 1 000 000), WO99/30794 (NALCO) propose l'emploi d'un polymère à haut poids moléculaire à base de méthylacrylate et acide acrylique, WO99/61129 (NALCO) propose comme floculant un mélange dextran + amidon. Malgré le surcoût et les effets secondaires parfois gênants de certains de ces additifs, cette pratique est à présent généralisée.

L'aptitude à l'épaississement des boues, c'est-à-dire la possibilité de donner par tassement des suspensions de concentration maximale en matière sèche, est une propriété spécifique de la boue, et par conséquent de la bauxite dont elle est issue. Dans les conditions habituelles, c'est en général cette aptitude à l'épaississement qui est l'élément prépondérant du régime d'un décanteur, dont une caractéristique de marche est définie par le rapport K entre le volume de liqueur claire sortant du décanteur et le volume de la liqueur imprégnée dans la boue extraite.

Enfin, avec cette technique de sédimentation, le lavage méthodique des boues s'effectue par dilutions et décantations successives, avec circulation à contre-courant des boues et de l'eau de lavage. L'efficacité du lavage est fonction de la quantité d'eau utilisée, de la constante d'épaississement K des décanteurs- laveurs traversés et du nombre de lavages successifs effectués. L'eau de lavage s'enrichit progressivement en soude et en aluminate de sodium entraînés par les boues. A la fin de son parcours dans la chaîne de lavage, l'eau, après avoir été utilisée pour le lavage des boues issues de la décantation de la suspension après attaque, se présente sous la forme d'une liqueur d'aluminate de sodium diluée (clair du premier décanteur-laveur) qui est en général dirigée vers la sortie d'attaque pour diluer la suspension: on récupère ainsi une partie de la soude entraînée dans les boues rouges. Toutefois, la dilution ne doit être trop importante puisque la liqueur doit être, après décomposition, concentrée par évaporation pour être recyclée en tant aue liqueur d'attaque. Il y a donc intérêt à réduire au minimum la quantité d'eau de lavage réintroduite pour la dilution. La solution la plus économique doit résulter d'un compromis entre la quantité d'eau utilisée, le nombre de lavages adopté et l'épaississement obtenu à chaque décantation de la chaîne de lavage. Pour diminuer la quantité d'eau consommée (donc l'énergie nécessaire pour l'évaporer), il faut rechercher un épaississement efficace des boues, ce qui est toujours difficile à obtenir avec la fine granulométrie des boues rouges.

Par ailleurs, des techniques de séparation alternatives à la sédimentation ont été développées. On a cherché à remplacer le décanteur-épaississeur par un dispositif permettant de réaliser plus rapidement la séparation entre solide et liquide, par exemple un décanteur centrifuge. Par le biais d'une préparation particulière de la suspension, la séparation peut également être effectuée par filtration, comme l'enseigne la demande FR 2 846 319 de la demanderesse, où la bauxite broyée est mélangée à la liqueur d'aluminate déjà portée à une température proche de la température d'ébullition, ce qui a pour effet surprenant d'améliorer grandement la filtrabilité de la suspension qui en résulte. On peut ainsi envisager avec un tel procédé de remplacer le décanteur-épaississeur par une série de filtres classiques fonctionnant sous vide ou sous pression.

### PROBLEME POSE

La demanderesse a cherché, indépendamment de la bauxite utilisée et sans augmenter la consommation de floculants, à accélérer et améliorer la séparation liquide/solide de la suspension qui contient la liqueur d'aluminate et les résidus insolubles.

Accélérer la séparation revient à augmenter la vitesse d'extraction des résidus solides résultant de l'attaque de ladite bauxite, en particulier ceux qui se présentent sous forme de particules très difficiles à séparer, c'est-à-dire celles dont la granulométrie est inférieure à 100 µm. Augmenter la vitesse d'extraction de ces résidus permet de diminuer le temps de séjour de la liqueur d'aluminate sursaturée entre la dilution et la décomposition. Diminuer le temps de séjour de la liqueur sursaturée entre la dilution et la décomposition permet d'éviter un phénomène économiquement désastreux: la rétrogradation, c'est-à-dire la précipitation intempestive de particules de trihydrate d'alumine qui se produit avant que les résidus insolubles aient été séparés; le trihydrate d'alumine précipité précocement, en mélange intime avec les boues rouges, est évacué avec elles et ne peut être valorisé. La diminution du temps de séjour permet également, à risque de rétrogradation égal, d'augmenter les conditions de sursaturation de la liqueur d'aluminate et donc d'obtenir une meilleure productivité globale du cycle, se traduisant par une extraction plus efficace de l'alumine.

Améliorer la séparation revient à obtenir un liquide plus clair et/ou des boues plus épaisses. Augmenter l'épaississement ou le tassement des boues permet de les laver plus efficacement avec moins d'eau.

Bien que la description de l'invention présentée ci-après s'appuie sur la technique de séparation par sédimentation avec l'emploi d'un décanteur-épaississeur, le perfectionnement doit pouvoir également s'appliquer aux techniques de séparation alternatives évoquées plus haut.

### OBJET DE L'INVENTION

Un premier objet selon l'invention est un procédé de fabrication de trihydrate d'alumine par attaque alcaline de bauxite selon le procédé Bayer, qui comporte le broyage puis l'attaque de la bauxite broyée par mise en contact avec une liqueur d'aluminate de sodium, l'attaque conduisant à la formation d'une suspension que l'on traite pour séparer les résidus insolubles de la liqueur d'aluminate de sodium, la liqueur d'aluminate ainsi obtenue étant ensuite décomposée puis recyclée comme liqueur d'attaque après avoir été séparée du trihydrate d'alumine précipité au cours de la décomposition, ledit procédé étant caractérisé en ce que, pour améliorer et accélérer la séparation de la liqueur d'aluminate et des résidus insolubles de granulométrie inférieure à 100 µm (les résidus insolubles de granulométrie supérieure à 100 µm, s'ils existent, ont été séparés auparavant à l'aide d'appareillages classiques de l'industrie minière), on fait passer au moins partiellement la suspension contenant lesdits résidus insolubles par un hydrocyclone.

Classiquement, le traitement pour séparer les résidus insolubles de la liqueur d'aluminate s'appuie sur une technique de sédimentation: la suspension passe après attaque dans un décanteur-épaississeur et la sousverse est extraite pour être ensuite lavée à contre-courant par une eau qui s'enrichit progressivement en soude, cette dernière étant avantageusement utilisée pour la dilution de la suspension après attaque. Le procédé selon l'invention se présente comme un perfectionnement de cette technique de sédimentation. Toutefois, notamment avec la première modalité selon l'invention, le décanteur-épaississeur utilisé classiquement pourrait être avantageusement remplacé par un autre dispositif, apte à traiter plus efficacement des flux de moindre importance de suspensions plus épaisses, par exemple un décanteur centrifugeur ou un filtre.

Quel que soit le dispositif de séparation utilisé dans le circuit Bayer, la présente invention ne propose pas le remplacement de ce dispositif par un ou plusieurs hydrocyclones mais une association de ce dispositif existant avec au moins un hydrocyclone, placé soit en amont (alimentation) soit en aval (sousverse et/ou surverse) dudit dispositif.

Le procédé selon l'invention ne concerne pas le dessablage des résidus insolubles, avec des sables de granulométrie supérieure à 100 µm environ, typiquement supérieure ou égale à 106 µm (dans la pratique, les sables sont, suivant les usines, retenus par un crible de 106 µm ou 315 µm), ce dernier étant effectué par des moyens conventionnels qui ne peuvent convenir à la séparation efficace de particules dont la dimension (D50) est inférieure à 10 µm. En d'autres termes, le procédé selon l'invention permet d'accélérer et d'améliorer, au sein de la suspension, la séparation entre la liqueur d'aluminate de sodium et les résidus insolubles de granulométrie strictement inférieure à 106 µm. En dehors du dessablage, l'emploi d'hydrocyclones dans un circuit Bayer n'était jusqu'à présent connu que pour isoler des particules d'hydrate d'alumine de taille supérieure à 50 µm (classification). Il ne semblait a priori pas possible d'employer les hydrocyclones pour séparer les fines particules des boues rouges (D50 < 10 µm) mais la demanderesse, après avoir étudié les différents paramètres qui régissent le fonctionnement d'un hydrocyclone, a pu définir des conditions de fonctionnement appropriées à une séparation rapide de ces résidus qui permettent l'emploi des dits hydrocyclones en différentes étapes du procédé, quitte à faire fonctionner en parallèle un nombre assez élevé de ces hydrocyclones (typiquement quelques dizaines à quelques centaines).

Selon l'invention, on peut faire passer la suspension par au moins un hydrocyclone placé en amont ou en aval du dispositif de séparation existant (décanteur-épaississeur, décanteur centrifuge ou filtre). Ainsi,
- dans une première modalité, on utilise au moins un hydrocyclone en amont du dispositif de séparation solide/liquide existant, placé sur le circuit d'alimentation dudit dispositif et employé comme clarificateur de la liqueur sursaturée, la sousverse du ou des hydrocyclones alimentant ledit dispositif;
- dans une deuxième modalité, on utilise au moins un hydrocyclone en amont ou en aval du dispositif de séparation solide/liquide existant, employé comme épaississeur des boues de résidus insolubles;
- dans une troisième modalité, on utilise un hydrocyclone en combinaison avec le dispositif de séparation liquide/solide employé à la caustification (en général un décanteur-épaississeur) pour améliorer la séparation liquide/solide des boues de caustification.

Selon la première modalité de l'invention, on utilise au moins un hydrocyclone comme clarificateur de la liqueur d'aluminate sursaturée. On prélève au moins une aliquote de suspension après attaque et dilution que l'on fait passer par au moins un hydrocyclone particulier, caractérisé en ce que le diamètre de buse de sousverse est supérieur à 90% du diamètre de buse de surverse, de préférence compris entre 90% et 110% fois ledit diamètre de buse de surverse.

Selon cette première modalité, on ajoute avantageusement du floculant dans la suspension avant son introduction dans l'hydrocyclone et la sousverse de l'hydrocyclone est épaissie dans le dispositif de séparation existant sans qu'il y ait besoin d'un ajout supplémentaire important de floculant. Quand un ajout de floculant a été effectué dans la suspension diluée en amont de l'hydrocyclone, on constate que la surverse de l'hydrocyclone est clarifiée de telle sorte que sa teneur en matière sèche est typiquement divisée par un facteur supérieur à dix et est suffisamment faible pour que l'on puisse la diriger soit directement soit après mélange avec la surverse du dispositif de séparation existant vers la filtration de sécurité et la chaîne de décomposition. On a constaté d'autre part que la surverse de l'hydrocyclone contenait de très gros flocons et s'avérait être très facilement filtrable.

Ainsi, selon un mode de réalisation préféré de cette première modalité, on ajoute du floculant dans l'aliquote de suspension diluée qui est dirigée vers le
ou les hydrocyclones. La liqueur sursaturée issue de la surverse du ou des hydrocyclone est dirigée vers la chaîne de décomposition sans passer par le décanteur-épaississeur et les boues issues de la sousverse du ou des hvdrocyclones est dirigée vers le décanteur-épaississeur où elles sont clarifiées et épaissies sans ou avec très peu de floculant supplémentaire.

L'intérêt de la combinaison hydrocyclone + dispositif de séparation existant de la première modalité, c'est-à-dire en faisant passer au moins partiellement la suspension en sortie d'attaque par un hydrocyclone, réside dans le fait que la séparation s'effectue très rapidement (temps de séjour de quelques secondes): une grande partie du flux de liqueur d'aluminate n'a pas à passer par le dispositif de séparation existant, ce dernier ayant de ce fait un débit de suspension à traiter nettement inférieur (de l'ordre de 30% si l'ensemble de la suspension passe par des hydrocyclones). On peut ainsi augmenter le débit de la suspension sans changer les installations. En fait, une fraction importante des résidus solides est traitée par l'hydrocyclone, ce qui permet de diminuer significativement la quantité de floculant nécessaire au dispositif de séparation existant. Comme le débit de liquide orienté vers le dispositif de séparation existant est également diminué, il est possible par ce biais de dégoulotter et/ou d'augmenter la productivité dudit dispositif de séparation existant.

Alors que selon le procédé classique de sédimentation, le temps de séjour moyen de la liqueur entre sa dilution et son entrée dans la chaîne de décomposition s'évaluait en heures, ce dernier tombe à quelques secondes avec la première modalité de la présente invention. Il s'en suit qu'il n'y a pratiquement plus de risque de rétrogradation, c'est-à-dire de précipitation intempestive de particules de trihydrate d'alumine avant séparation des résidus insolubles. La diminution du temps de séjour permettrait également, à risque de rétrogradation égal, d'augmenter les conditions de sursaturation de la liqueur d'aluminate et donc d'obtenir globalement une meilleure productivité globale du cycle. Mais il faudrait par ailleurs diminuer le temps de séjour entre dilution et décomposition de la portion de liqueur ne passant pas par la surverse de l'hydrocyclone et il serait souhaitable dans ce cas de remplacer le décanteur-épaississeur utilisé classiquement par un autre dispositif, apte à séparer plus rapidement des suspensions plus épaisses, par exemple un centrifugeur-décanteur ou un filtre.

Par ailleurs, l'introduction d'hydrocyclone en amont du décanteur-épaississeur permet d'envisager de faire une dilution moins poussée, ce qui diminuerait la consommation énergétique globale du Bayer.

Selon la deuxième modalité de l'invention, on utilise au moins un hydrocyclone comme épaississeur des boues des résidus insolubles, soit pour traiter au moins une partie de la suspension issue de l'attaque en amont du dispositif de séparation existant, soit pour épaissir les boues issues du dispositif de séparation existant, en particulier en amont ou en tête de la chaîne de lavage.

Selon une première version de cette deuxième modalité, on utilise au moins un hydrocyclone pour épaissir au moins une partie de la suspension issue de l'attaque pour ménager le dispositif de séparation existant. On prélève au moins une aliquote de suspension après attaque, de préférence après dilution (diminution du caustique par exemple à l'aide du clair du premier laveur) et/ou après ajout de floculant. On fait passer cette aliquote par au moins un hydrocyclone. Les paramètres géométriques de l'hydrocyclone sont définis pour épaissir efficacement la sous-verse qui est dirigée directement vers les boues de la sous-verse du dispositif de séparation existant. La surverse est dirigée vers le dispositif de séparation existant, diluant ainsi l'autre aliquote de la suspension qui est directement versée dans le dispositif existant (c'est-à-dire diminuant la concentration en matière sèche). On ménage ainsi le fonctionnement dudit dispositif existant, en le dégoulottant et en améliorant son efficacité, la séparation liquide/solide étant favorisée par la dilution.

Selon une deuxième version de cette deuxième modalité, on utilise au moins un hydrocyclone pour épaissir au moins une partie des boues rouges, issues du dispositif de séparation existant. Les boues rouges sont extraites du circuit Bayer lorsqu'elles atteignent typiquement une teneur en matière sèche supérieure à 400 g/l. Dans la technique de séparation par sédimentation, la suspension passe après attaque et dilution dans un décanteur-épaississeur, dont les conditions d'utilisation sont définies pour que la sousverse du décanteur-épaississeur atteigne ou dépasse une telle teneur en matière sèche. Cette boue de résidus insolubles est extraite pour être ensuite lavée à contre-courant dans une chaîne de décanteurs-laveurs par une eau qui s'enrichit progressivement en soude, le clair du premier laveur étant introduit dans le circuit Bayer pour réaliser la dilution après attaque. La sousverse de chaque laveur-décanteur s'appauvrit progressivement en soude et la sousverse du dernier laveur, communément appelée "boues rouges", est évacuée, par exemple par lagunage ou dry-stacking.

Selon la deuxième version de cette deuxième modalité de l'invention, la chaîne de lavage est modifiée de la façon suivante: on introduit au moins un hydrocyclone dans le circuit menant à contre-courant l'eau de lavage d'un décanteur-laveur vers un décanteur-laveur en amont de celui-ci. Si on désigne par W₁, Wz ..., Wₙ les décanteur-laveurs de la chaîne de lavage, l'ordre croissant des indices correspondant au sens de circulation des boues, et si Wᵢ correspond au laveur concerné par l'introduction d'un hydrocyclone, une aliquote de l'eau de lavage provenant du décanteur-laveur aval Wᵢ₊₁ est mélangée aux boues de la sousverse du décanteur-laveur amont Wᵢ₊₁. Le mélange ainsi réalisé est introduit dans au moins un hydrocyclone dont la surverse alimente le décanteur- laveur Wᵢ et dont les boues épaissies de la sousverse sont mélangées aux boues de la sousverse de ce même décanteur-laveur Wₗ, le mélange étant ensuite dirigé vers le décanteur-laveur aval Wₗ₊₁. De préférence, on introduit le ou les hydrocyclone(s) à proximité du premier laveur pour que les boues soient épaissies dès le début de la chaîne de lavage. Dans l'exemple B.3 donné ci-après, au moins un hydrocyclone est monté sur le circuit de l'eau de lavage alimentant le deuxième laveur (i=2).

L'introduction du ou des hydrocyclones permet d'améliorer l'efficacité du lavage par augmentation de la concentration des boues. Le nombre de laveurs dans la chaîne de lavage peut être diminué ou la quantité d'eau utilisée pour le lavage peut être diminuée.

Les première et deuxième modalités de l'invention peuvent être avantageusement combinées.

Selon la troisième modalité de l'invention, on combine le décanteur de caustification avec au moins un hydrocyclone. La caustification s'effectue en général sur l'eau de lavage des boues rouges, qui, remontant à contre-courant dans la chaîne de lavage, s'enrichit progressivement en aluminate de sodium. Ainsi enrichie, l'eau de lavage est une liqueur d'aluminate diluée que l'on utilise pour la dilution de la suspension en sortie d'attaque: on récupère ainsi une partie de la soude entraînée avec les boues rouges. La caustification de cette liqueur de dilution permet, grâce à un apport de chaux, de transformer le carbonate de sodium contenu dans la liqueur, ce qui a pour effet d'augmenter la teneur en soude caustique de la liqueur et d'entraîner la précipitation de carbonate de calcium. Les précipités de carbonate de calcium ont également une faible taille et leur séparation de la liqueur est en général effectuée en utilisant un décanteur, appelé décanteur-clarificateur. Cette séparation étant lente et difficile en raison de la faible taille des particules, l'eau de lavage étant au stade où elle est prélevée pour caustification une liqueur d'aluminate diluée, il s'agit bien ici aussi, dans cette troisième modalité de l'invention, de chercher à améliorer la séparation d'une liqueur d'aluminate et de résidus insolubles.

Selon cette troisième modalité, la sousverse du décanteur de caustification est orientée vers l'hydrocyclone. Dans le cas où la liqueur claire qui est caustifiée est la surverse du deuxième (resp. troisième) décanteur-laveur, la surverse de l'hydrocyclone est dirigée vers le premier (resp. le deuxième) décanteur-laveur. La sousverse de l'hydrocyclone est mélangée, soit en totalité, soit en partie, à celle de l'un des derniers bacs décanteurs-laveurs. Si la sousverse de l'hydrocyclone n'est mélangée qu'en partie à celle de l'un des derniers bacs décanteurs-laveurs, alors l'autre partie est recyclée vers le réacteur de caustification, afin d'en améliorer le rendement de réaction.

De manière classique, la surverse du décanteur de caustification est introduite dans la chaîne de lavage en un point situé en amont (sens de circuit des boues) de celui où le clair à caustifier a été prélevé. Par exemple, si la liqueur claire à caustifier est la surverse du deuxième (resp. troisième) décanteur-laveur, la surverse du décanteur de caustification est dirigée vers le premier (resp. le deuxième) décanteur-laveur.

### DESCRIPTION DETAILLEE DE L'INVENTION

### FIGURES

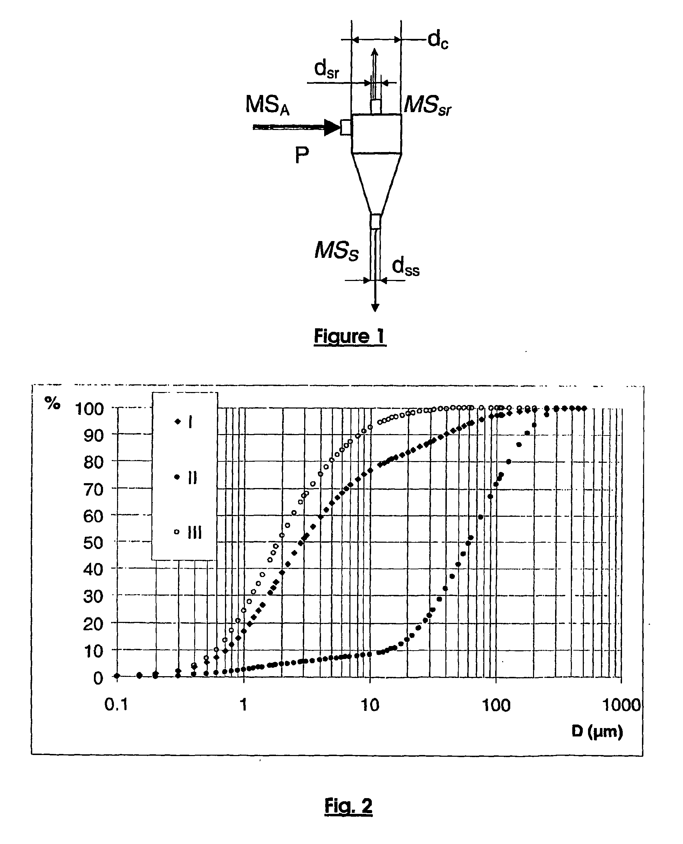

La figure 1 illustre le schéma d'un hydrocyclone.

Le graphique de la figure 2 illustre les répartitions granulométriques (% passant cumulé en fonction du diamètre (D) en microns) des particules présentes respectivement dans l'alimentation (I), la sousverse (II) et la surverse (III) d'un hydrocyclone testé.
La figure 3 schématise un circuit Bayer typique de l'art antérieur.
La Figure 4 illustre un mode de réalisation particulier de la première modalité de l'invention (hydrocyclone clarificateur).
Les figures 5a et 5b illustrent deux modes de réalisation particuliers de la deuxième modalité de l'invention (hydrocyclone épaississeur).
La figure 6 illustre un exemple typique de circuit de caustification de l'eau de la chaîne de lavage appliqué sur le Bayer de la figure 1.
La figure 7 illustre le mode de réalisation particulier de la troisième modalité de l'invention, appliqué au perfectionnement du procédé illustré en figure 6.

### A. Essais

### A.1 Caractéristiques d'un hydrocyclone (Figures 1 et 2)

Les principaux paramètres de fonctionnement d'un hydrocyclone (appelé par la suite également cyclone) sont :
- le diamètre de l'hydrocyclone **(de),** la pression d'alimentation **(P),**
- le diamètre de la buse de surverse **(dₛᵣ),**
- le diamètre de la buse de sousverse **(dₛₛ).**

Le diamètre de coupure du cyclone est le diamètre minimum des particules ayant 100% de chance de se trouver en sousverse. Il est lié à la géométrie (diamètres des buses d'alimentation, de sousverse et de surverse, forme et hauteur du colimaçon d'alimentation, conicité et hauteur de la partie basse) et aux conditions d'emploi de l'appareil (pression, matière sèche à l'alimentation **MS_{A}**).

Dans les conditions industrielles du Bayer où l'emploi d'hydrocyclones est connu de l'art antérieur (classification de l'hydrate), les diamètres de coupure oscillent entre 40 et 50 µm pour des hydrocyclones de 50 à 100 mm. En raison de la faible granulométrie des particules qui composent la suspension issue de l'attaque, il semblait impossible d'agir sur la géométrie courante et les paramètres classiques de fonctionnement des hydrocyclones pour effectuer la séparation liquide/solide dans ladite suspension, à savoir concentrer dans la sousverse des particules de diamètre (D50) inférieur à 10 µm environ et/ou clarifier la suspension en surverse. Malgré cela, la demanderesse a testé l'emploi d'hydrocyclones pour mieux séparer les boues en pensant que l'indice défavorable d'une faible granulométrie résultait plus d'un préjugé que d'un constat universellement établi et que les fines particules des boues avaient en fait des caractéristiques particulières qui ne se retrouvent pas dans l'hydrate et dont on peut probablement tirer profit, notamment une certaine propension à former des amas de particules (clusters) ayant des trajectoires hydrodynamiques intermédiaires entre les particules individuelles et les agglomérats.

Des essais préliminaires sur de la suspension après attaque Bayer ont permis de donner l'influence de certains paramètres:
- diamètre de la buse de sousverse **dₛₛ** Plus le diamètre de la buse de sousverse est petit, plus le diamètre de coupure augmente et plus la granulométrie (D50) de la sousverse augmente, celle de la surverse restant quasiment identique. L'interprétation physique en est que plus le diamètre de la buse de sousverse augmente, plus le débit de liquide vers la sousverse est important, avec d'autant plus de probabilité d'entraîner des fines particules vers la sousverse.
- Effet de la pression P à l'alimentaion de l'hydrocyclone:
   Lorsque la pression à l'alimentation augmente, toutes choses égales par ailleurs, le diamètre de coupure augmente et la granulométrie (D50) de la sousverse augmente.
   L'effet de la pression sur la sélection est cependant moins marqué lorsque le diamètre de la buse de sousverse est très étranglé.
- Teneur en matière sèche à l'alimentation (**MS_{A}**):
   Toutes choses égales par ailleurs, lorsque la MS augmente à l'alimentation du cyclone, le diamètre de coupure augmente et la granulométrie (D50) de la sousverse augmente
   De même que pour l'effet de la pression à l'alimentation, l'effet de la MS_{A} sur la sélection est cependant plus marqué lorsque le diamètre de la buse de sousverse dₛₛ est grand.

Dans les conditions industrielles du Bayer, on peut envisager d'utiliser, pour extraire les résidus insolubles, des hydrocyclones de de compris entre 24 mm et 250 mm: si d_{c} est plus petit, l'hydrocyclone traite des flux trop faibles et le nombre d'hydrocyclones à utiliser dans la chaîne Bayer devient économiquement prohibitif; si de est plus grand, le diamètre de coupure devient totalement inapproprié.

### A.2: Hydrocyclone épaississeur

On a testé un hydrocyclone de diamètre de = 75 mm équipé d'une buse de surverse de diamètre **dₛᵣ**=26mm. Les paramètres et points de fonctionnement obtenus sont précisés dans le tableau 1.

**Tableau 1**

| dₛₛ mm | P bar | MS_{A}g/l | Q_{A} m3/h | Qₛₛm3/h | Q_{SR}m3/h | MSₛₛ g/l | MSₛᵣg/l |
|---|---|---|---|---|---|---|---|
| 8 | 1.8 | 144 | 6.34 | 0.34 | 6.00 | 1030 | 97 |
| 10 | 1.6 | 116 | 6.00 | 0.40 | 5.60 | 792 | 70 |

où Q_{A}, Q_{SS}, Q_{SR} sont respectivement les débits d'alimentation, de sousverse et de surverse, MS_{SS} et MS_{SR} sont les teneurs en matière sèche respectivement de la surverse et de la sousverse.

Un décanteur pilote a été alimenté avec la surverse de l'hydrocyclone dans laquelle du floculant a été versé. Le point de fonctionnement du décanteur en régime stabilisé est présenté dans le tableau 2 :

**Tableau 2**

| Q_{A} m3/h | MS_{A} g/l | Q_{SR}m3/h | MS_{SR}g/l | QS_{SS} m3/h | MSS_{SS} g/l |
|---|---|---|---|---|---|
| 5,6 | 70 | 5 | 0 | 0,6 | 498 |

De ces essais, on peut tirer les enseignements suivants:
- il est parfaitement envisageable de traiter une partie du flux de la suspension après attaque avec un hydrocyclone sans recourir à un floculant avec une boue tassée en sousverse du cyclone à plus de 750 g/l, ce qui est considérable.
- la surverse de l'hydrocyclone a été traitée avec succès dans le décanteur, c'est-à-dire que la floculation s'est déroulée correctement avec un bon tassement en sousverse du décanteur et une excellente clarification (en fait, la courbe granulométrique de la surverse est très proche de celle de l'alimentation).
- l'emploi d'hydrocyclones dans une installation existante permet le dégoulottage d'un décanteur, d'un laveur, ou d'une chaîne entière de décantation/lavage.

Le graphique de la figure 2 illustre les répartitions granulométriques des particules présentes respectivement dans l'alimentation (I), la sousverse (II) et la surverse (III) de l'hydrocyclone dont le diamètre de buse de sousverse **dₛₛ** est de 8 mm.

### A.3: Hydrocyclone clarificateur

Dans le but d'obtenir une surverse aussi claire que possible, on utilise des hydrocyclones dont le diamètre de la buse de sousverse dₛₛ est presque aussi grand, voire plus grand que le diamètre de la buse de surverse dₛᵣ. On peut résumer cette condition par d_{SS} > 0,9 * d_{SR}. Les paramètres de fonctionnement d'un hydrocyclone de dc 50 mm permettant d'obtenir une surverse la plus claire possible avec une teneur en matière sèche à l'alimentation **MS_{A}** de 90 à 140 g/l ont été définis.

Les caractéristiques du cyclone testé étaient les suivantes :
**dc** = 50mm, **dₛᵣ**= 15 mm, **dₛₛ**= 14 mm, avec une pression d'alimentation P de 1.8 bar.
La sousverse du cyclone peut alimenter par gravité la virole d'un décanteur pilote. Nous avons mesuré les différents débits surverse Q_{SR} et sousverse Q_{SS} avec et sans ajout de floculant nous avons aussi relevé les teneurs en matière sèche des deux flux. Les résultats sont regroupés dans le tableau 3.

**Tableau 3**

| Floculant | P (bar) | MS_{A} (g/l) | Q_{A} (m3/h) | Q_{SS}(m3/h) | Q_{SR}(m3/h) | MS_{SS}(g/l) | MS_{SR}(g/l) |
|---|---|---|---|---|---|---|---|
| Sans | 1.8 | 133 | 3.6 | 2.3 | 1.3 | 170 | 70 |
| Avec | 1.8 | 136 | 3.6 | 2.3 | 1.3 | 210 | 8 |

Nous avons alimenté le décanteur avec la sousverse du cyclone sans et ensuite avec ajout de floculant.
Sans appoint de floculant, la boue de la sousverse du cyclone ne s'épaississait pas ou presque pas dans le décanteur.
Avec un ajout de floculant (même avec un dosage remarquablement faible), on obtient la clarification, ce qui permet de tasser les boues en sousverse du décanteur. Ainsi, en alimentant l'hydrocyclone avec une suspension contenant 90 à 140 g/l de teneur en matière sèche et en introduisant un floculant à l'alimentation de l'hydrocyclone, nous obtenons une surverse ayant une teneur en matière sèche inférieure à 10 g/l. La sousverse du cyclone peut être clarifiée et épaissie dans le décanteur moyennant un ajout très faible de floculant supplémentaire à l'entrée du décanteur.
Enfin, la surverse de l'hydrocyclone est une suspension floculée (de gros flocons sont observables), qui, après mélange avec la surverse du décanteur, présente une très bonne filtrabilité.

### B. Application aux installations industrielles

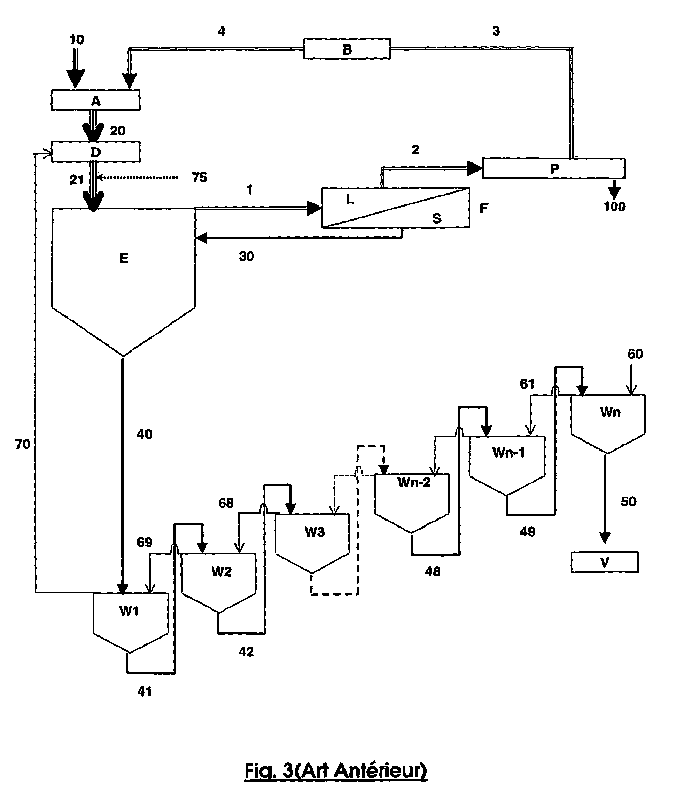

### B.1 Chaîne Bayer typique de l'art antérieur (Figure 3)

Le minerai de bauxite broyé 10 est attaqué à chaud **(A)** au moyen d'une solution aqueuse d'hydroxyde de sodium **4** à concentration appropriée, provoquant ainsi la solubilisation de l'alumine et l'obtention d'une suspension 20 constituée de particules de résidu inattaqué baignant dans une solution d'aluminate de sodium, appelée "liqueur d'aluminate". Cette suspension est ensuite diluée (D) et traitée de façon à séparer, par décantation **(E)**, les résidus inattaqués **40** de la liqueur d'aluminate 1. Celle-ci, une fois "nettoyée" par filtration (F) de la surverse **1** du décanteur-épaississeur **E,** est refroidie jusqu'à une température où elle se trouve dans un état en fort déséquilibre de sursaturation (liqueur **2**) qui entraîne la précipitation du trihydrate d'alumine 100 pendant l'étape dite de "décomposition" **(P)**. Après la décomposition la liqueur d'aluminate de sodium **3,** appauvrie en hydrate d'alumine du fait de la précipitation, est recyclée après concentration par évaporation **(B)** vers l'attaque **(A)** du minerai 10. On ajoute en général un floculant **75** dans la liqueur d'aluminate, par exemple en un point en amont du décanteur-épaississeur **E.**

Les boues rouges, dont les particules ont une granulométrie inférieure à 100 µm (en pratique inférieure à 106 µm ou 315 µm suivant la bauxite considérée), sont séparées par sédimentation. La suspension **21** passe après attaque et dilution dans un décanteur-épaississeur **E** et la sousverse **40** est extraite pour être ensuite lavée à contre-courant dans une chaîne de décanteurs-laveurs (**W1, W2, W3,** ..., **Wn-1, Wn**) par une eau qui s'enrichit progressivement en soude **(60, 61, 69, 70),** le clair 70 du premier laveur **W1** étant introduit dans le circuit Bayer pour réaliser la dilution **(D)** après attaque. Par contre, l'imprégnation des sousverses **(41, 42, 49,50)** des différents laveurs-décanteurs **(W1, W2, W3,** ..., **Wn-1, Wn)** s'appauvrit progressivement en soude et la sousverse **50** du dernier laveur **Wn ,** communément appelée "boues rouges", est évacuée, par exemple par lagunage ou dry-stacking.

Typiquement, la teneur en matière sèche:
- de la suspension **20** avant dilution est de 120-160 g par litre de liqueur;
- de la suspension diluée **21** est de 40-80 g par litre de liqueur;
- de la surverse **1** du décanteur-épaississeur **E** est inférieure à 1 g/l, typiquement 0,2 g/l; cette teneur chute à une valeur proche de 0 dans la liqueur sursaturée 2 issue de la filtration de sécurité **(F).**
- de la sousverse **40** du décanteur-épaississeur **E** est de 300-500 g/litre de suspension; cette teneur reste à peu près constante dans la chaîne de lavage, de sorte que les boues rouges **50** en sortie du dernier laveur **Wn** ont une teneur en matière sèche voisine de 400 g/litre.

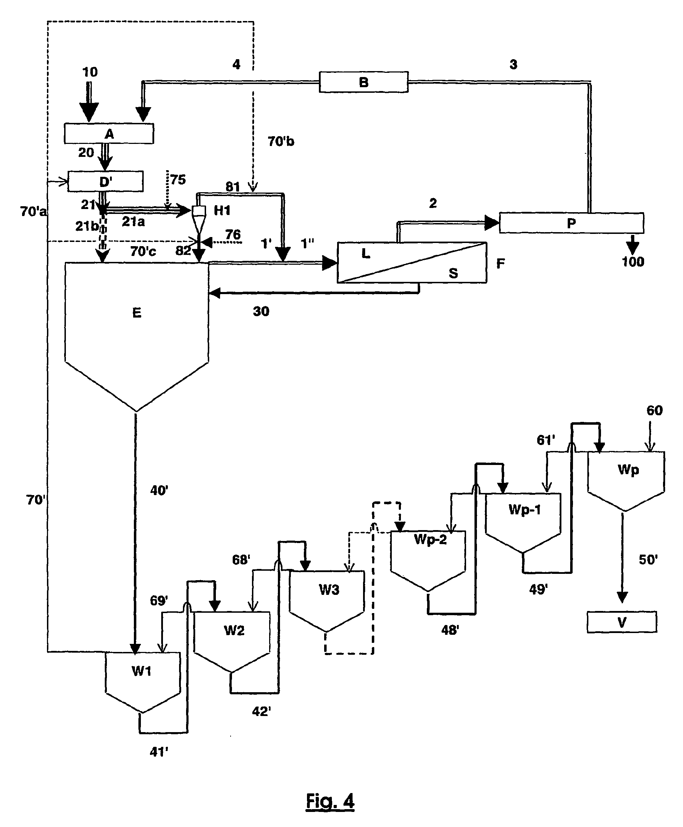

### B.2 Première modalité: hydrocyclone utilisé comme éclaircisseur de la liqueur sursaturée (Figure 4)

La figure 4 illustre un mode de réalisation particulier de cette première modalité de l'invention.

Le circuit utilisé est proche du Bayer classique de la figure 1 mais diffère de ce dernier par le fait qu'une aliquote **21a** de la suspension diluée, représentant la plus grande partie possible, de préférence la totalité, de la suspension diluée **21,** est dirigée vers au moins un hydrocyclone H1 fonctionnant en clarificateur comme l'un de ceux présentés ci-dessus au paragraphe A.3. La teneur en matière sèche à l'entrée de l'hydrocyclone pouvant atteindre 140 g/l, on peut envisager d'effectuer une dilution **D'** moins poussée que dans l'art antérieur par exemple en n'utilisant qu'une aliquote **70'a** du clair de laveur, quitte à la compléter en apportant par exemple une autre aliquote **70'b** de clair de laveur sur la sur-verse **81** de l'hydrocyclone **H1,** et/ou encore en apportant par exemple une autre aliquote **70'c** de clair de laveur sur la sousverse 82 de l'hydrocyclone **H1.**

Comme nous l'avons vu en A.3, l'apport de floculant permet de clarifier efficacement la surverse **81** de l'hydrocyclone **H1,** à tel point que celle-ci peut être dirigée soit directement, soit après mélange avec la surverse **1'** du décanteur-épaississeur vers la filtration de sécurité **F** et la chaîne de décomposition **P.** On effectue donc un ajout de d'additif floculant 75 dans l'aliquote **21a** de suspension diluée en amont de l'hydrocyclone **H1**. Dans le cadre particulier de cet exemple, on effectue un deuxième apport d'une faible quantité de floculant **76** dans la sousverse **82** de l'hydrocyclone **H1.**

Typiquement, la teneur en matière sèche:
- de la suspension **20** avant dilution est de 120-160 g par litre de liqueur;
- de la suspension diluée **21a** est de 110 g par litre de liqueur;
- de la liqueur sursaturée 1", résultant du mélange de la surverse **81** de l'hydrocyclone H1 et de la surverse 1' du décanteur-épaississeur E est inférieure à 5 g/l; grâce à la surverse **81** de l'hydrocyclone bien floculée, la liqueur sursaturée présente une très bonne filtrabilité. La teneur en matière sèche chute à une valeur proche de 0 dans la liqueur sursaturée **2** issue de la filtration de sécurité **(F);**
- de la sousverse **40'** du décanteur-épaississeur **E** est de 750 g/litre de liquide d'imprégnation; cette teneur reste à peu près constante dans la chaîne de lavage, de sorte que le nombre p de laveurs dans la chaîne de lavage peut être diminué. Les boues rouges **50'** en sortie du dernier laveur Wp ont une teneur en matière sèche voisine de 750 g/litre.

L'intérêt de la combinaison hydrocyclone + décanteur en sortie d'attaque réside dans le fait que la séparation s'effectue très rapidement (temps de séjour de quelques secondes): une grande partie du flux de liqueur d'aluminate n'a pas à passer par le décanteur-épaississeur, qui de ce fait à un débit de suspension à traiter nettement inférieur (de l'ordre de 30% si l'ensemble de la suspension passe par des hydrocyclones).

Pour un flux de suspension diluée **21a** de 1000 m3/h, on peut utiliser, suivant la nature des bauxites attaquées:
- 340 hydrocyclones de diamètre 50 mm, comme celui décrit dans A.3 (**dss**= 14 mm; **d_{SR}=** 15 mm)
- 125 hydrocyclones de diamètre 75 mm, avec **d_{SS}=** 21 mm; **d_{SR}=** 22,5 mm
- 85 hydrocyclones de diamètre 100 mm, avec **d_{SS}=** 28 mm; **d_{SR}=** 30 mm
- 50 hydrocyclones de diamètre 150 mm, avec **d_{SS}=** 38 mm; **d_{SR}=** 40 mm
- 30 hydrocyclones de diamètre 200 mm, avec **d_{SS}=** 42 mm; **d_{SR}=** 44 mm

### B.3 Deuxième modalité:

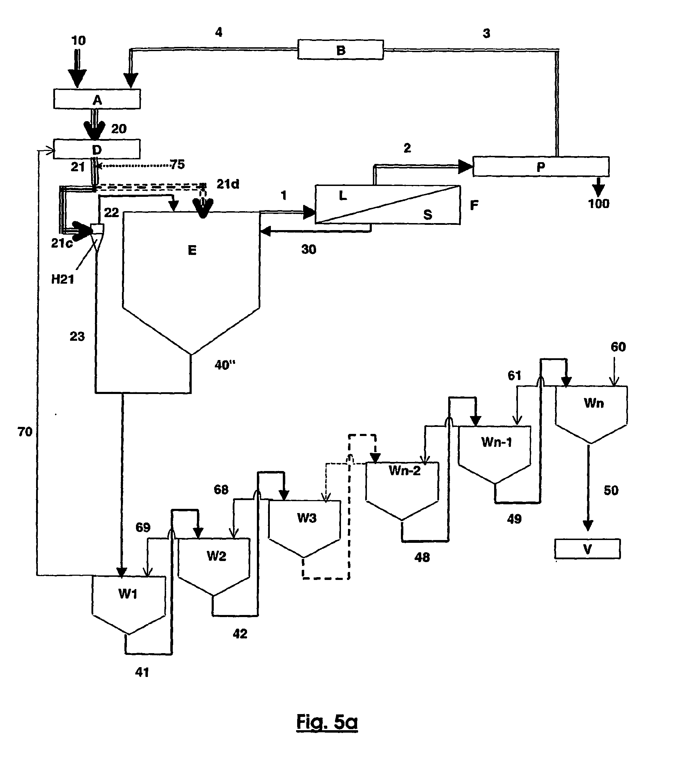

### B3.1 Hydrocyclone utilisé comme épaississeur de la suspension après attaque (Figure 5a)

La figure 5a montre le circuit utilisé, qui est proche du Bayer classique de la figure 1 mais diffère de ce dernier par le fait qu'une aliquote **21c** de la suspension, représentant la plus grande partie possible, de préférence la totalité, de la suspension, est dirigée vers au moins un hydrocyclone **H21** fonctionnant en épaississeur. On prélève cette aliquote de suspension après dilution par le clair du premier laveur **70** et après ajout de floculant **75.** On fait passer cette aliquote par au moins un hydrocyclone **H21.**

Les paramètres géométriques de l'hydrocyclone **H21** sont définis pour épaissir efficacement la sous-verse **23** qui est dirigée directement vers les boues de la sous-verse **40"** du décanteur-épaississeur **E.** La surverse **22** est dirigée vers l'alimentation du décanteur épaississeur, diluant ainsi, si elle existe, l'autre aliquote **21d** de la suspension qui est directement versée dans le décanteur-épaississeur **E.**

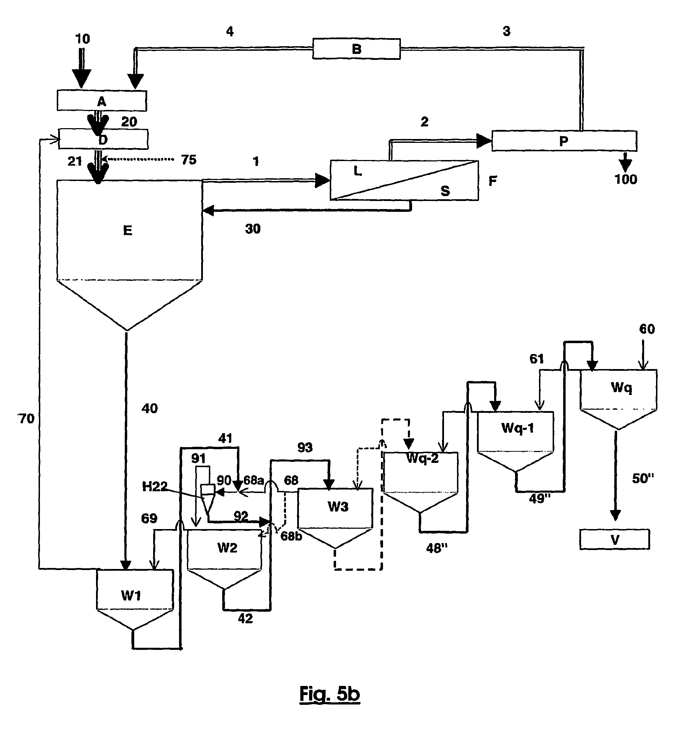

### B3.2 Hydrocyclone utilisé comme épaississeur des boues rouges (Figure 5 b)

La figure 5b illustre un mode de réalisation particulier de cette deuxième modalité de l'invention.

Le circuit utilisé est proche du Bayer classique de la figure 1 mais diffère de celui-ci par sa chaîne de lavage.

On introduit au moins un hydrocyclone **H22** dans le circuit menant à contre-courant l'eau de lavage d'un laveur au laveur précédent. De préférence, on introduit l'hydrocyclone dans un circuit à proximité du premier laveur **W1**, pour que les boues soient épaissies dès le début de la chaîne de lavage. Dans l'exemple particulier présenté ici, une aliquote **68a** de l'eau de lavage du laveur **W3** au laveur **W2** passe par au moins un hydrocyclone **H22.** Les dimensions et les paramètres de fonctionnement de l'hydrocyclone **H22** sont choisis comme indiqué en A2. Cette aliquote est mélangée à la sousverse **41** du premier laveur **W1** et le mélange **90** est introduit dans au moins un hydrocyclone **H22.** La sousverse est dirigée vers le laveur **W3** avec la sousverse **42** du deuxième laveur **W2.** La surverse **91** est introduite dans le laveur **W2.**

Typiquement, la teneur en matière sèche:
- de la suspension **20** avant dilution est de 120-160 g par litre de liqueur;
- de la suspension diluée **21** est de 60-80 g par litre de liqueur;
- de la surverse **1** du décanteur-épaississeur **E** est inférieure à 1 g/l, typiquement 0,2 g/l; cette teneur chute à une valeur proche de 0 dans la liqueur sursaturée **2** issue de la filtration de sécurité **(F).**
- de la sousverse **40** du décanteur-épaississeur **E** est de 450 g/litre de liquide d'imprégnation; la sousverse **41** du premier laveur **W1** a à peu près la même teneur en matière sèche.
- l'eau de lavage **68a** étant mélangée à la sousverse **41,** la suspension **90** en résultant est introduite dans **H22** avec une teneur en matière sèche de l'ordre de 140 g/l. La surverse 91 de l'hydrocyclone a une teneur en matière sèche de 100 g/l, la sousverse **92** a une teneur en matière sèche de 1000 g/l. On voit donc que la chaîne de lavage, à partir du laveur **W3** lave les résidus avec une concentration en matière sèche beaucoup plus élevée, typiquement comprise entre 700 g/l et 1000 g/l. Les boues rouges 50" sont évacuées avec une teneur en matière sèche de 700-1000 g/l Ceci permet d'améliorer l'efficacité du lavage par augmentation de la concentration des boues et le nombre q de laveurs dans la chaîne de lavage peut ainsi être diminué.

Pour un flux de suspension de résidus insolubles **40** de 1000 m3/h, ayant typiquement une teneur en matière sèche de 450 g/l, on peut utiliser, suivant la nature des bauxites attaquées:
- 125 hydrocyclones de diamètre 75 mm, avec **d_{SS}=** 8 mm; **d_{SR}=** 26 mm
- 85 hydrocyclones de diamètre 100 mm, avec **d_{SS}=** 12 mm; **d_{SR}=** 39 mm
- 50 hydrocyclones de diamètre 150 mm, avec **d_{SS}=** 16 mm; **d_{SR}=** 52 mm
- 30 hydrocyclones de diamètre 200 mm, avec **d_{SS}=** 26 mm; **d_{SR}=** 56 mm

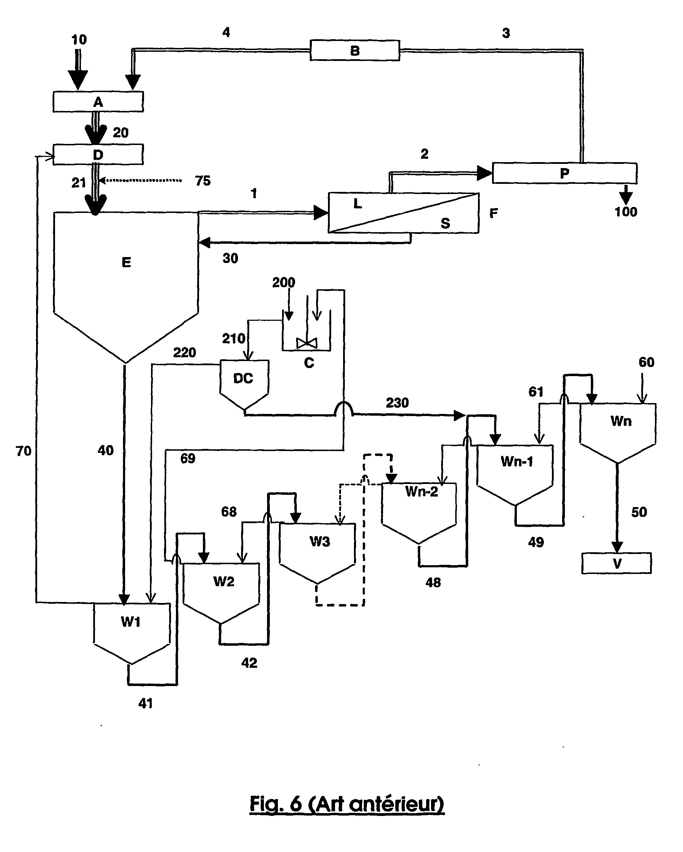

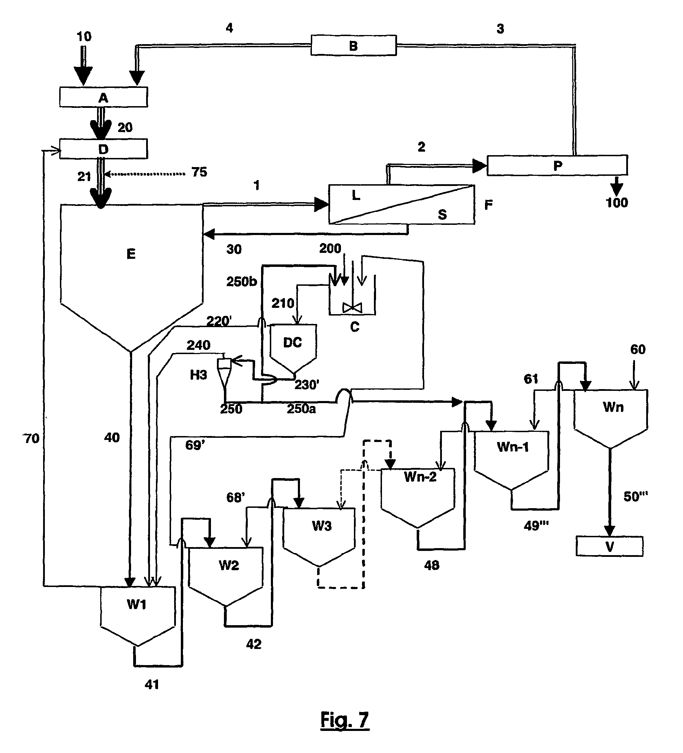

### B.4 Troisième modalité: hydrocyclones utilisés en combinaison avec le décanteur de caustification Figures 6 et 7)

En général, l'eau de lavage issue de la surverse du deuxième ou du troisième laveur de la chaîne de lavage des résidus insolubles est caustifiée. On transforme ainsi une partie de la soude carbonatée entraînée avec les boues rouges. La figure 6 reprend le schéma de la figure 3 en y ajoutant un circuit typique de caustification: avant d'être versée dans le premier laveur W1, l'eau de lavage **69**, enrichie en soude et en carbonate de sodium par les lavages dans décanteurs-laveurs avals, est dirigée vers un bac **C** (réacteur de caustification) où l'on verse une certaine quantité de chaux **200.** Le mélange est maintenu en agitation dans le réacteur de caustification **C** avec une température de réaction voisine de 95°C. Après un temps de séjour suffisant pour transformer la chaux et le carbonate de sodium en hydroxyde de sodium et en carbonate de calcium, la surverse **210** est conduite vers un décanteur, appelé décanteur de caustification **DC,** au fond duquel le carbonate de calcium précipité s'accumule. La surverse **220** est dirigée vers le premier laveur **W1.** La sousverse **230** est mélangée à celle de l'un des derniers bacs décanteurs-laveurs (**Wₙ₋₂** dans l'exemple illustré en figure 6).

Selon cette troisième modalité de l'invention (illustrée en figure 7), la sous-verse **230'** du bac décanteur de caustification est pompée vers au moins un hydrocyclone **H3**. La surverse **240** du ou des hydrocyclones **H3** est dirigée vers le premier laveur **W1**. Les boues épaissies de la sousverse **250** du ou des hydrocyclones **H3** sont mélangées partiellement (**250a**) aux boues sortant de l'un des derniers bacs décanteurs-laveurs **(Wₙ₋₂** dans l'exemple illustré en figure 6) et sont recyclées en partie **(250b)** vers le réacteur de caustification **C.**

Les boues **230'** issues du décanteur de caustification **DC** ont typiquement une concentration en matière sèche de 200 à 300 g/l. La combinaison du ou des hydrocyclone(s) **H3** et du décanteur de caustification **DC,** le ou les hydrocyclones étant alimentés par la sousverse **230'** du décanteur de caustification a pour but et avantage de :
- de diminuer le recyclage de clair dans le laveur vers où sont pompées les boues, car les boues ont été davantage épaissies dans l'hydrocyclone;
- de permettre un recyclage d'une partie de ces boues ainsi épaissies en début de caustification (celles-ci jouant alors le rôle d'amorce dans réacteur de caustification), permettant ainsi d'améliorer le rendement de caustification.

Avec un clair de deuxième laveur **69'** à caustifier circulant avec un débit de 500 m3/h, on peut obtenir, après la réaction de caustification et en sortie de décanteur de caustification, un débit de 40 m3/h de boues **230'** à une concentration en solides de 250 g/l, ce flux de boues étant ensuite pompé vers les hydrocyclones combinés au décanteur de caustification en un nombre variable suivant leur dimension:
- 5 hydrocyclones de diamètre 75 mm, avec dss= 8 mm; d_{SR}= 26 mm
- 4 hydrocyclones de diamètre 100 mm, avec dss= 11 mm; d_{SR}= 34 mm
- 2 hydrocyclones de diamètre 150 mm, avec dss= 14 mm; d_{SR}= 45 mm

La surverse **220'** du décanteur de caustification **DC** et la surverse **240** du ou des hydrocyclones **H3** sont dirigées vers le premier laveur **W1.**

## Revendications

1. Procédé de fabrication de trihydrate d'alumine par attaque alcaline de la bauxite selon le procédé Bayer, qui comporte le broyage puis l'attaque (A) de la bauxite broyée par mise en contact avec une liqueur (4) d'aluminate de sodium, l'attaque conduisant à la formation d'une suspension (20) que l'on dilue (D) et que l'on traite pour séparer (E;F) les résidus insolubles (40) de la liqueur (2) d'aluminate de sodium, la liqueur d'aluminate sursaturée ainsi obtenue étant ensuite décomposée (P) puis recyclée comme liqueur d'attaque (4) après avoir été séparée du trihydrate d'alumine (100) précipité au cours de la décomposition, la séparation de la liqueur d'aluminate et des résidus insolubles étant réalisée à l'aide d'un dispositif de séparation liquide-solide tel qu'un décanteur-épaississeur (E; W2; DC), un décanteur centrifuge ou un filtre, **caractérisé en ce que**, pour accélérer et améliorer la séparation de la liqueur d'aluminate de sodium et des résidus insolubles de granulométrie strictement inférieure à 106 µm au sein de la suspension (21 a; 41; 230') qui contient ladite liqueur d'aluminate de sodium et lesdits résidus insolubles et qui alimente ledit ou est issue dudit dispositif de séparation liquide-solide (E; W2; DC), on fait passer au moins partiellement ladite suspension (21a; 41; 230') par un hydrocyclone (H1; H21; H22; H3).

2. Procédé selon la revendication 1 **caractérisé en ce qu'**on prélève au moins une aliquote de suspension (21a) après attaque et dilution que l'on fait passer par au moins un hydrocyclone (H1) **caractérisé en ce que** le diamètre (dss) de la buse de sousverse est supérieur à 90% du diamètre (d_{SR}) de la buse de surverse, de préférence compris entre 90% et 110% fois ledit diamètre de buse de surverse.

3. Procédé selon la revendication 2 dans lequel les résidus insolubles (40) de la liqueur d'aluminate de sodium sont séparés à l'aide d'un décanteur-épaississeur (E) et dans lequel ladite aliquote de suspension (21 a) diluée après attaque passe dans au moins un hydrocyclone (H1) en amont dudit décanteur-épaississeur.

4. Procédé selon la revendication 3 dans lequel on ajoute du floculant (75) dans ladite aliquote (21 a) de suspension diluée et dans lequel la liqueur sursaturée (81) issue de la surverse dudit hydrocyclone (H1) est dirigée vers la chaîne de décomposition (P) sans passer par le décanteur-épaississeur (E), les boues issues de la sousverse (82) dudit hydrocyclone étant dirigées vers le décanteur-épaississeur (E).

5. Procédé selon la revendication 3 dans lequel on reporte la dilution de la suspension en aval du décanteur-épaississeur, par exemple en diluant la liqueur sursaturée (1") arrivant au niveau de la filtration de sécurité (F).

6. Procédé selon la revendication 1 **caractérisé en ce qu'**on prélève au moins une aliquote de suspension après attaque que l'on fait passer par au moins un hydrocyclone (H21), la sous-verse (23) étant dirigée directement vers les boues de la sous-verse (40") du dispositif de séparation existant (E) et la surverse (22) étant dirigée vers l'alimentation du dispositif de séparation existant (E), diluant ainsi l'autre aliquote (21 d) de la suspension qui est directement versée dans le dispositif existant (E).

7. Procédé selon la revendication 6 dans lequel le prélèvement de la suspension après attaque est effectué après diminution du caustique et après ajout de floculant.

8. Procédé selon la revendication 1 **caractérisé en ce que** la boue de résidus insolubles (40) est extraite lorsqu'elle atteint une teneur en matière sèche supérieure à 400 g/l pour être ensuite lavée à contre-courant dans une chaîne de décanteurs-laveurs (W1, W2, W3, ..., Wq-1, Wq) et dans lequel on introduit au moins un hydrocyclone (H22) dans le circuit qui mène à contre-courant l'eau de lavage (68, 68a) d'un premier décanteur-laveur (W3) vers un deuxième décanteur-laveur (W2) situé en amont (sens de circulation des boues) du premier décanteur-laveur.

9. Procédé selon la revendication 8 dans lequel au moins une aliquote (68a) de l'eau de lavage (68) provenant du décanteur-laveur (W3) situé en aval d'un décanteur-laveur (W2) est mélangée aux boues de la sousverse (41) du décanteur (W1) en amont du dudit décanteur-laveur et dans lequel ledit mélange (90) est introduit dans au moins un hydrocyclone (H22) dont la surverse (91) alimente ledit décanteur-laveur (W2) et les boues épaissies de la sousverse (92) sont mélangées à celles de la sousverse (42) de ce même décanteur-laveur, le mélange (93) étant dirigé vers le décanteur-laveur (W3) aval.

10. Procédé selon la revendication 1 dans lequel on prélève au moins une aliquote (21 a) de suspension après attaque et dilution que l'on fait passer par au moins un hydrocyclone (H1) en suivant le procédé de l'une quelconque des revendications 2 à 5, l'autre aliquote (21c) pouvant éventuellement passer par au moins un hydrocyclone (H21) en suivant le procédé selon la revendication 6 ou 7, et dans lequel la boue de résidus insolubles (40') est extraite pour être ensuite lavée à contre-courant dans une chaîne de décanteurs-laveurs (W1, W2, W3, ..., Wq-1, Wq) au sein de laquelle on introduit au moins un hydrocyclone (H22) en suivant le procédé selon l'une quelconque des revendications 8 à 9.

11. Procédé selon la revendication 1 dans lequel l'eau de la chaîne de lavage des résidus insolubles issus de l'attaque de la bauxite est caustifiée par passage dans un bac réacteur (C) dans lequel on verse de la chaux (200), le mélange étant maintenu pendant un temps suffisant pour que des précipités de carbonate de calcium se forment puis étant dirigé vers un décanteur de caustification (DC) pour séparer ladite eau de lavage desdits précipités, **caractérisé en ce qu'**on associe le décanteur de caustification (DC) avec au moins un hydrocyclone (H3), en alimentant le ou lesdits hydrocyclone(s) avec les boues de la sousverse (230') du décanteur de caustification (DC)

12. Procédé selon la revendication 11 dans lequel la surverse (240) du ou des hydrocyclones (H3) est dirigée vers la chaîne de lavage au niveau du décanteur-laveur (W1) situé en amont du décanteur laveur (W2) dont le clair a été extrait pour caustification et dans lequel les boues de la sousverse (250) du ou des hydrocyclones sont en partie (250b) recyclées vers le réacteur de caustification (C) et en partie (250a) mélangées aux boues (48) sortant de l'un (Wₙ₋₂) des derniers décanteurs-laveurs de la chaîne de lavage.

## Claims

1. Process for production of alumina trihydrate by alkaline digestion of bauxite using the Bayer process which comprises grinding and then digestion (A) of the ground bauxite by bringing it into contact with a sodium aluminate liquor (4), digestion consisting of forming a slurry (20) that is diluted (D) and treated to separate (E; F) insoluble residues (40) from the sodium aluminate liquor (2), the pregnant aluminate liquor thus obtained then being crystallised (P) and recycled as a green liquor (4) after being separated from the alumina trihydrate (100) precipitated during crystallisation, the aluminate liquor and insoluble residues being separated using a liquid / solid separation device such as a settler - thickener (E; W2; DC), a centrifuge settler or a filter, **characterised in that** the said slurry (21a; 41; 230') is at least partially passed through a hydrocyclone (H1; H21; H22; H3), to accelerate and improve separation of the sodium aluminate liquor from the insoluble residues with particle size smaller than 106 µm in the slurry (21a; 41; 230') that contains the said sodium aluminate liquor and the said residues and that supplies or is derived from the said liquid / solid separation device.

2. Process according to claim 1, **characterised in that** at least one slurry aliquot (21a) is drawn off after digestion and dilution, and is then passed through at least one hydrocyclone (H1), **characterised in that** the diameter (dₛₛ) of the underflow nozzle is more than 90% of the diameter (dₛᵣ) of the overflow nozzle, preferably between 90% and 110% of the said diameter of the overflow nozzle.

3. Process according to claim 2, wherein the insoluble residues (40) of the sodium aluminate liquor are separated using a settler - thickener (E) and wherein the said slurry aliquot (21a) diluted after digestion passes through at least one hydrocyclone (H1) upstream from the settler - thickener.

4. Process according to claim 3, wherein flocculent (75) is added into the diluted slurry aliquot (21a) and wherein the pregnant liquor (81) exiting from the overflow of the said hydrocyclone (H1) is sent to the crystallisation line (P) without passing through the settler - thickener (E) and mud exiting from the underflow (82) of the said hydrocyclone is sent to the settler - thickener (E).

5. Process according to claim 3, wherein the location of the dilution of the slurry is transferred to the downstream side of the settler - thickener, for example by diluting the pregnant liquor (1") flowing near the safety filtration device (F).

6. Process according to claim 1, **characterised in that** at least one slurry aliquot is drawn off after digestion, and is passed through at least one hydrocyclone (H21), the underflow (23) being sent directly towards the mud of the underflow (40") from the existing separation device (E) and the overflow (22) being directed towards the input side of the existing separation device (E), thus diluting the other aliquot (21d) of the slurry that is directly poured in the existing device (E).

7. Process according to claim 6, wherein the slurry aliquot is drawn off after digestion, preferably after reduction of the caustic concentration and after adding flocculent.

8. Process according to claim 1, **characterised in that** the mud of insoluble residues (40) is extracted when it typically reaches a solid content of more than 400 g/l, and is then backwashed in a line of settlers - washers (W1, W2, W3, Wq-1, .., Wq-1, Wq), and wherein at least on hydrocyclone (H22) is added into the circuit that carries backwash water (68, 68a) from a first settler - washer (W3) to a second settler - washer (W2) on the upstream side (mud circulation direction) of the first settler - washer).

9. Process according to claim 8, wherein at least one aliquot (68a) of the wash water (68) from the settler
- washer (W3) on the downstream side of a settler - washer (W2) is mixed with mud from the underflow (41) from the settler (W1) on the upstream side of the said settler - washer and wherein the said mix (90) is introduced into at least one hydrocyclone (H22) in which the overflow (91) feeds the said settler - washer (W2) and thickened mud from the underflow (92) is mixed with the mud from the underflow (42) from this same settler - washer, the mix (93) being sent to the downstream settler - washer (W3).

10. Process according to claim 1, wherein at least one slurry aliquot (21a) is drawn off after digestion and dilution and is passed through at least one hydrocyclone (H1) following the process described in any one of claims 2 to 5, the other aliquot (21c) possibly passing through at least one hydrocyclone (H21) according to the process described in either claim 6 or 7, and wherein the mud of insoluble residues (40') is extracted and then backwashed in a line of settlers - washers (W1, W2, W3, Wq-1, .., Wq-1, Wq), in which at least one hydrocyclone (H22) is added following the process described in either claim 8 or 9.

11. Process according to claim 1, wherein the water from the washing line of insoluble residues output from digestion of bauxite is causticised by passing it through a reactor tank (C) into which lime (200) is poured, the mix then being kept for long enough for calcium carbonate precipitates to form and then being directed towards a causticisation settler (DC) to separate the said wash water from the said precipitates, **characterised in that** the causticisation settler (DC) is associated with at least one hydrocyclone (H3), by supplying the said hydrocyclone(s) with underflow mud (230') from the causticisation settler (DC).

12. Process according to claim 11, wherein the overflow (240) from the hydrocyclone(s) (H3) is directed to the washing line at the settler - washer (W1) on the upstream side of the settler - washer (W2) from which the clear liquor has been extracted for causticisation and wherein the mud from the underflow (250) from the hydrocyclone(s) is partly (250b) recycled to the causticisation reactor (C) and partly (250a) mixed with mud (48) output from one (Wₙ₋₂) of the last settlers - washers in the washing line.

## Patentansprüche

1. Verfahren zur Herstellung von Aluminiumhydroxid durch alkalischen Aufschluss des Bauxits nach dem Bayer-Verfahren, umfassend die Mahlung und den Aufschluss (A) des gemahlenen Bauxits durch Inkontaktbringen mit einer Natriumhydroxidlösung (4), wobei der Aufschluss zur Bildung einer Suspension (20) führt, die verdünnt (D) und behandelt wird, um die unlöslichen Rückstände (40) von der Natriumaluminatlauge (2) abzutrennen (E; F), und die so gewonnene übersättigte Aluminatlauge sodann zersetzt (P) und als Aufschlusslauge (4) zurückgeführt wird, nachdem sie von dem bei der Zersetzung abgeschiedenen Aluminiumhydroxid (100) abgetrennt wurde, wobei die Trennung von Aluminatlauge und unlöslichen Rückständen mit einer Vorrichtung zur Fest-Flüssig-Trennung wie z.B. einem Eindickdekanter (E; W2; DC), einem Zentrifugaldekanter oder einem Filter erfolgt, **dadurch gekennzeichnet, dass** zur Beschleunigung und Verbesserung der Trennung von Natriumaluminatlauge und unlöslichen Rückständen mit einer Korngröße strikt kleiner als 106 µm innerhalb der Suspension (21a; 41; 230'), welche die Natriumaluminatlauge und die unlöslichen Rückstände enthält und die Vorrichtung zur Fest-Flüssig-Trennung (E; W2; DC) speist bzw. daraus stammt, die Suspension (21a; 41; 230') zumindest teilweise durch einen Hydrozyklon (H1; H21; H22; H3) geleitet wird.

2. Verfahren nach Anspruch 1, **dadurch gekennzeichnet, dass** mindestens ein aliquoter Teil (21 a) der Suspension nach Aufschluss und Verdünnung entnommen wird und durch mindestens einen Hydrozyklon (H1) geleitet wird, **dadurch gekennzeichnet, dass** der Durchmesser (d_{SS}) der Unterlaufdüse größer ist als 90 % des Durchmessers (d_{SR}) der Überlaufdüse, vorzugsweise zwischen 90 % und 110 % des Überlaufdüsendurchmessers beträgt.

3. Verfahren nach Anspruch 2, bei dem die unlöslichen Rückstände (40) der Natriumaluminatlauge mit einem Eindickdekanter (E) abgetrennt werden und bei dem der aliquote Teil (21 a) der verdünnten Suspension nach Aufschluss in mindestens einen Hydrozyklon (H1) fließt, der vor dem Eindickdekanter liegt.

4. Verfahren nach Anspruch 3, bei dem dem aliquoten Teil (21 a) der verdünnten Suspension ein Flockungsmittel (75) zugegeben wird und bei dem die übersättigte Lauge (81) aus dem Überlauf des Hydrozyklons (H1) der Zersetzungskette (P) zugeleitet wird, ohne dabei den Eindickdekanter (E) zu durchlaufen, während der Schlamm aus dem Unterlauf (82) des Hydrozyklons dem Eindickdekanter (E) zugeleitet wird.

5. Verfahren nach Anspruch 3 bei dem die Verdünnung der Suspension an eine Stelle hinter dem Eindickdekanter verlegt wird, zum Beispiel indem die ankommende übersättigte Lauge (1") in Höhe der Sicherheitsfiltration (F) verdünnt wird.

6. Verfahren nach Anspruch 1, **dadurch gekennzeichnet, dass** mindestens ein aliquoter Teil der Suspension nach Aufschluss entnommen wird und durch mindestens einen Hydrozyklon (H21) geleitet wird, wobei der Unterlauf (23) direkt zum Schlamm des Unterlaufs (40") der existierenden Trennvorrichtung (E) geführt wird und der Überlauf (22) zur Speisung der existierenden Trennvorrichtung (E) geführt wird, so dass der andere aliquote Teil (21 d) der Suspension, der direkt in die existierende Trennvorrichtung (E) läuft, verdünnt wird.

7. Verfahren nach Anspruch 6, bei dem die Entnahme der Suspension nach erfolgtem Aufschluss nach Reduzierung der Natronlaugenmenge und nach Zugabe eines Flockungsmittels durchgeführt wird.

8. Verfahren nach Anspruch 1, **dadurch gekennzeichnet, dass** der Schlamm aus unlöslichen Rückständen (40) extrahiert wird, wenn er einen Gehalt an Trockensubstanz von mehr als 400 g/l erreicht, und sodann in einer Reihe von Waschdekantern (W1, W2, W3, ..., Wq-1, Wq) im Gegenstrom gewaschen wird, und bei dem mindestens ein Hydrozyklon (H22) in den Kreislauf eingeschaltet wird, der das Waschwasser (68, 68a) im Gegenstrom von einem ersten Waschdekanter (W3) zu einem zweiten Waschdekanter (W2) führt, der (in Flußrichtung des Schlamms) vor dem ersten Waschdekanters liegt.

9. Verfahren nach Anspruch 8, bei dem mindestens ein aliquoter Teil (68a) des Waschwassers (68) aus dem Waschdekanter (W3), der hinter dem Waschdekanter (W2) liegt, dem Schlamm des Unterlaufs (41) des davor liegenden Dekanters (W1) zugemischt wird und das Gemisch (90) in mindestens einen Hydrozyklon (H22) eingeleitet wird, dessen Überlauf (91) den Waschdekanter (W2) speist, und bei dem der eingedickte Schlamm des Unterlaufs (92) dem des Unterlaufs (42) desselben Waschdekanters zugemischt wird, wobei das Gemisch (93) zu dem dahinter liegenden Waschdekanter (W3) geleitet wird.

10. Verfahren nach Anspruch 1, bei dem mindestens ein aliquoter Teil (21 a) der Suspension nach Aufschluss und Verdünnung entnommen wird und unter Befolgung des Verfahrens nach einem der Ansprüche 2 bis 5 durch mindestens einen Hydrozyklon (H1) geleitet wird, wobei eventuell der andere aliquote Teil (21 c) unter Befolgung des Verfahrens nach einem der Ansprüche 6 oder 7 durch mindestens einen Hydrozyklon (H21) laufen kann, und bei dem der Schlamm aus unlöslichen Rückständen (40') extrahiert wird und sodann in einer Kette von Waschdekantern (W1, W2, W3, ..., Wq-1, Wq) im Gegenstrom gewaschen wird, in die unter Befolgung des Verfahrens nach einem der Ansprüche 8 bis 9 mindestens ein Hydrozyklon (H22) eingeschaltet wird.

11. Verfahren nach Anspruch 1, bei dem das Wasser der Waschkette zum Waschen der unlöslichen Rückstände aus dem Aufschluss des Bauxits kaustifiziert wird, indem es einen Reaktionsbehälter (C) durchläuft, in den Kalk (200) geschüttet wird, wobei das Gemisch lange genug aufrechterhalten wird, damit sich Calciumcarbonat-Präzipitate bilden, und dann zu einem Kaustifizierdekanter (DC) geleitet wird, um das Waschwasser von den Präzipitaten zu trennen, **dadurch gekennzeichnet, dass** der Kaustifizierdekanter (DC) mit mindestens einem Hydrozyklon (H3) verbunden wird, indem der bzw. die Hydrozyklone mit dem Schlamm des Unterlaufs (230') des Kaustifizierdekanters (DC) gespeist werden.

12. Verfahren nach Anspruch 11, bei dem der Überlauf (240) des bzw. der Hydrozyklone (H3) zu der Waschkette in Höhe des Waschdekanters (W1) geleitet wird, der vor dem Waschdekanter (W2) liegt, dessen Klarfiltrat durch Kaustifizierung extrahiert wurde, und bei dem der Schlamm des Unterlaufs (250) des bzw. der Hydrozyklone zum Teil (250b) in den Kaustifizierbehälter (C) zurückgeführt wird und zum Teil (250a) dem aus einem (Wₙ₋₂) der letzten Waschdekanter der Waschkette austretenden Schlamm (48) zugemischt wird.
